Europäisches Patentamt

European Patent Office

Office européen des brevets

(11) Numéro de publication: **0 480 334 A1**

## (12) DEMANDE DE BREVET EUROPEEN

(21) Numéro de dépôt: **91116969.6**

(22) Date de dépôt: **04.10.91**

(51) Int. Cl.5: **G06K 7/06**

(30) Priorité: **08.10.90 FR 9012356**

(43) Date de publication de la demande:
**15.04.92 Bulletin 92/16**

(84) Etats contractants désignés:
**BE CH DE ES FR GB IT LI NL**

(71) Demandeur: **ALCATEL CIT**
**12 Rue de la Baume**
**F-75008 Paris(FR)**

(72) Inventeur: **Pernet, Michel**
**8, Grande Rue**
**F-25300 Doubs(FR)**

(74) Mandataire: **Weinmiller, Jürgen et al**
**Lennéstrasse 9 Postfach 24**
**W-8133 Feldafing(DE)**

(54) **Dispositif remplissant notamment la fonction de lecteur de carte à micro-circuit.**

(57) Un exemple de réalisation comporte :
- un boîtier (1, 2);
- un circuit imprimé (3);
- un connecteur de carte à micro-circuit comportant :
  -- des contacts élastiques (5, 6) prolongés par des broches soudées au circuit imprimé (3);
  -- un cadre isolant (7) supportant les contacts;
  -- des fentes (9) pour introduire une carte à micro-circuit (14).

La paroi interne du boîtier (2) constitue le couvercle du connecteur de carte à micro-circuit, le cadre (7) supportant les contacts (5, 6) étant fixé directement au boîtier (2) par des rivets intégrés au boîtier.

Application notamment au lecteur de carte à micro-circuit intégré à un radiotéléphone de poche.

## FIG.1

L'invention concerne un dispositif remplissant notamment la fonction de lecteur de carte à micro-circuit, et ayant un encombrement réduit. Un lecteur de carte à micro-circuit est généralement un sous-ensemble d'un système tel qu'un terminal de transaction commerciale, un taxiphone, etc...Il permet de lire ou écrire des informations dans un micro-circuit, intégré dans une puce de silicium. La puce est placée dans l'épaisseur d'une carte et elle est accessible électriquement par des plages conductrices situées à la surface de la carte. Un lecteur comprend généralement : un connecteur, un circuit imprimé supportant des composants électroniques et le connecteur, un boîtier qui est généralement commun au lecteur et à d'autres sous-ensembles d'un système, et des moyens pour fixer le circuit imprimé au boîtier.

Une fente, ménagée dans le boîtier, permet d'introduire la carte dans le connecteur. Ce connecteur comprend classiquement : des moyens pour guider la carte pendant son introduction dans le connecteur; des moyens pour la positionner avec précision à l'intérieur de ce connecteur; et des contacts élastiques appuyant sur les plages conductrices de la carte, pour établir des connections. Un positionnement précis de la carte par rapport aux contacts élastique est d'une grande importance pour obtenir une faible résistance de contact, tout en évitant une usure rapide des plages conductrices et des contacts élastiques.

Il est connu, notamment par la demande de brevet français n° 2 623 313, de réaliser un connecteur de carte à micro-circuit comportant : un cadre en matière plastique portant les contacts élastiques, et un couvercle parallèle au plan du cadre et au plan de la carte. Ce document décrit un connecteur de carte dans lequel toutes les tolérances dimensionnelles sont déterminées par le cadre porte-contacts, lequel peut être une pièce moulée, à la fois très précise et économique. La carte est guidée, dans son plan, par deux glissières parallèles qui sont intégrées dans le couvercle, ou bien dans le cadre. Le couvercle repose sur des supports intégrés au cadre et définissant avec précision l'intervalle entre le couvercle et le cadre. Le couvercle détermine la distance de la carte par rapport aux contacts élastiques. Il exerce une pression sur la carte, en réaction à la pression exercée par les contacts.

Plusieurs pieds de centrage, intégrés au cadre et s'emboîtant dans des trous du couvercle, positionnent le couvercle face au cadre. Le couvercle est fixé au cadre par rivetage ou par vissage. L'ensemble du connecteur est classiquement fixé à un circuit imprimé en soudant des broches qui prolongent les contacts élastiques. Le circuit imprimé peut être fixé à un boîtier par vissage ou rivetage.

La demande de brevet européen EP 0 274 288 décrit un lecteur de carte à puce, destiné à être monté à l'intérieur d'un système électronique, et qui comporte :

- un boîtier constitué de deux capots, et enveloppant l'ensemble du lecteur;
- un circuit imprimé dont une face supporte des composants électroniques du lecteur;
- un connecteur de carte à micro-circuit, comportant principalement un cadre isolant supportant des contacts élastiques.

Le cadre isolant est surmoulé sur les contacts élastiques. Le cadre est placé sur la même face du circuit imprimé que les composants. Une extrémité de chaque contact élastique traverse le circuit imprimé et est soudée sur la face libre de ce circuit. Le circuit imprimé et le cadre sont enfermés entre les deux capots constituant le boîtier. Le cadre est positionné par rapport au premier capot, situé du côté de la face libre du circuit imprimé, au moyen de deux pions traversant le circuit imprimé par deux trous avec jeu, et s'emboîtant dans deux trous de ce premier capot. Le second capot, qui est situé du côté de la face supportant le cadre et les composants, est fixé au premier capot, à sa périphérie.

Le second capot joue le rôle d'une table de guidage pour la carte à puce, et exerce sur elle une pression en réaction à la pression des contacts élastiques. Il joue donc le rôle du couvercle du connecteur décrit dans la demande de brevet français n° 2 623 313. Le dispositif décrit dans la demande de brevet européen N° 0 274 288 est donc plus simple que celui décrit par la demande de brevet français n° 2 623 313, mais il présente un défaut de précision. En effet, la position de la carte par rapport aux contacts élastiques est soumise aux tolérances d'assemblage du cadre par rapport au premier capot, additionnées aux tolérances d'assemblage du premier capot par rapport au second capot, la carte étant guidée par ce second capot.

Il est envisagé de réaliser des appareils portatifs comportant un lecteur de carte à micro-circuit. Par exemple des radio- téléphones de poche peuvent comporter un lecteur de carte à micro-circuit, comme moyen de paiement, comme moyen d'identification de l'utilisateur, etc. Pour de telles applications, il est souhaitable de réduire le plus possible l'encombrement d'un lecteur de carte à micro-circuit, et éventuellement aussi de réduire son coût pour faciliter la diffusion de ce type d'appareil dans le public.

Le but de l'invention est de réduire l'encombrement d'un tel dispositif sans dégrader la précision de positionnement de la carte par rapport aux contacts.

L'objet de l'invention est un lecteur de carte à micro-circuit, comportant :

- un boîtier enveloppant l'ensemble du dispositif;
- un circuit imprimé;
- des moyens pour fixer le circuit imprimé au boîtier;
- un connecteur de carte à micro-circuit, comportant :

-- un cadre isolant supportant des contacts élastiques;

-- un couvercle pour exercer une pression sur une carte à micro-circuit;

-- des moyens pour fixer le cadre au couvercle;

caractérisé en ce que le couvercle du connecteur est intégré au boîtier du dispositif; et en ce que les moyens pour fixer le cadre au couvercle fixent le cadre directement au boîtier.

Le lecteur ainsi caractérisé a un encombrement et un coût réduit par rapport à un lecteur classique, mais il procure une bonne précision de positionnement de la carte. En effet, ce positionnement n'est soumis qu'aux tolérances d'assemblage du cadre par rapport au couvercle intégré au boîtier, puisqu'il n'y a pas de pièce intermédiaire pour fixer le cadre au couvercle intégré au boîtier.

L'invention sera mieux comprise et d'autres caractéristiques apparaîtront à l'aide de la description ci-dessous et des figures l'accompagnant :

- la figure 1 représente une vue en coupe d'un premier exemple de réalisation d'un dispositif, selon l'invention;
- la figure 2 représente une autre vue en coupe selon une autre direction de vue, du premier exemple de réalisation;
- la figure 3 représente une vue en coupe d'un second exemple de réalisation d'un dispositif selon l'invention;
- la figure 4 représente une vue en coupe d'une partie d'une variante du deuxième exemple de réalisation. La figure 1 représente un exemple de réalisation comportant :
- un boîtier formé de deux demi-coques, 1 et 2, en matière plastique moulée, contenant, par exemple, tous les sous-ensembles d'un radio-téléphone de poche, en particulier un lecteur de carte à micro-circuit;
- un circuit imprimé rigide 3;
- un cadre isolant 7, supportant des contacts élastiques, 5 et 6, prolongés par des broches 12 soudées au circuit imprimé 3.

La demi-coque 2, les contacts élastiques 5 et 6, et le cadre isolant 7 constituent un connecteur de carte à micro-circuit, la demi-coque 2 étant à la fois boîtier du radio-téléphone et couvercle du connecteur. Une fente 9, chanfreinée, permet d'introduire une carte 14 à l'intérieur du boîtier entre la paroi interne de la demi-coque 2 et les contats 5 et 6. Dans la zone où elle constitue le couvercle de connecteur, la paroi interne de la demi-coque 2 a une surface plane et lisse, dans cet exemple de réalisation. Le cadre 7 a une forme générale plane dont le plan est parallèle au plan de la paroi interne de la demi-coque 2. Il peut être réalisé de manière analogue à celle décrite dans la demande de brevet français n° 2 623 313. Des supports 4 intégrés à la périphérie du cadre 7 s'appuient contre la paroi interne de la demi-coque 2 et définissent avec précision l'intervalle entre cette paroi et le cadre 7. La paroi exerce une pression sur la carte 14, en réaction à la pression exercée par les contacts élastiques 5 et 6, lorsque la carte 14 est mise en place à l'intérieur du connecteur.

La demi-coque 1 a une forme telle qu'elle constitue un boîtier fermé, en la réunissant avec la demi-coque 2. Elles peuvent être solidarisées par des moyens classiques, non représentés; des vis par exemple. Le boîtier peut contenir d'autres sous-ensembles, non représentés, pour assurer toutes les fonctions d'un radio-téléphone de poche. Un jeu 10 est ménagé tout autour du circuit imprimé 3, de telle sorte qu'il est libre de prendre la position que lui impose sa fixation au cadre 7, lequel est fixé de manière précise, par rapport à la demi-coque 2, grâce aux rivets 13 intégrés dans celle-ci.

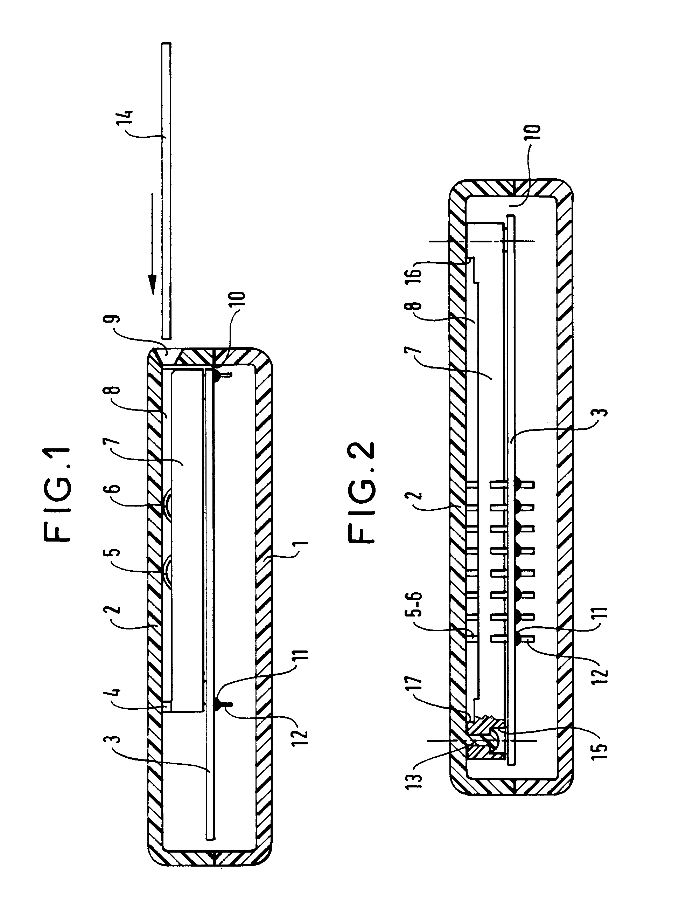

La figure 2 montre une vue en coupe du même exemple de réalisation, mais selon une direction de vue orthogonale à la direction de vue de la figure 1. La figure 2 montre en coupe partielle un angle du cadre 7 pour faire apparaître les moyens de fixation du cadre 7 au boîtier. Ces moyens de fixation sont constitués par 4 rivets, tel que le rivet 13, intégrés à la demi-coque 2, celle-ci étant réalisée en matière plastique moulée. Chaque rivet est emboîté dans un trou situé dans un coin du cadre 7. Ce trou comporte un épaulement 15 permettant de retenir le cadre 7 par un écrasement, à chaud, de l'extrémité du rivet 13.

Dans cet exemple de réalisation, le circuit imprimé 3 est un circuit rigide ayant de petites dimensions, et donc une faible masse. C'est pourquoi, il n'est pas prévu de moyens de fixation du circuit imprimé 3, à part les soudures 11 fixant le circuit imprimé 3 aux broches 12 prolongeant les contacts souples 5, 6. Les broches 12 sont solidement fixées au cadre 7, parce qu'il a été moulé sur ces broches. Le cadre 7 est fixé au boîtier par les rivets 13 mentionnés précédemment.

La figure 2 montre aussi que le cadre 7 comporte deux glissières parallèles, 17 et 16, destinées à guider la translation de la carte 14 lors de sa mise en place dans le lecteur.

Selon une variante de réalisation, la paroi interne du couvercle intégré à la demi-coque 2 n'est pas plane et lisse, mais comporte des glissières de guidage, et un bossage exerçant une pression renforcée dans la zone de la carte où sont situées les plages conductrices. Ces glissières et ce bossage sont en matière plastique moulée en même temps que le reste de la demi-coque 2, notamment les rivets 13.

Selon une autre variante de réalisation le circuit imprimé 3 peut être un circuit imprimé souple, ayant pour fonction, par exemple, de relier le connecteur à un sous-ensemble électronique.

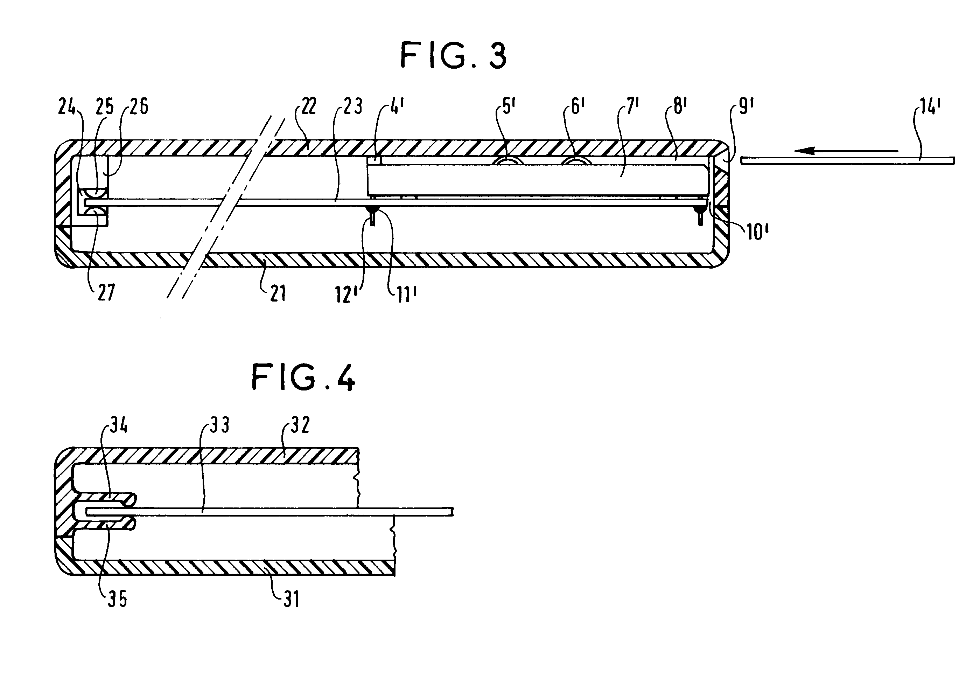

La figure 3 représente un second exemple de réalisation d'un lecteur selon l'invention, comportant un circuit imprimé rigide, 23, ayant des dimensions très supérieures à celles du cadre du connecteur, ce qui conduit à prévoir des moyens de fixation supplémentaires. Le connecteur comprend des éléments analogues à ceux décrits précédemment en référence aux figures 1 et 2. Ces éléments analogues portent la même référence numérique avec l'indice '.

Un jeu 10' est ménagé tout autour du circuit 23 mais une extrémité du circuit imprimé est fixée au boîtier par une pince 24 à 27, alors que l'autre extrémité est fixée au boîtier par l'intermédiaire des soudures 11' sur les broches 12' du connecteur de carte. Le boîtier comporte deux demi-coques 21 et 22, la demi-coque 22 constituant le couvercle du connecteur de carte.

La pince est constituée d'une rainure 24 intégrée à la demi-coque 22, et dont les deux flancs sont parallèles entre eux et au plan du circuit imprimé 23. Ces deux flancs sont garnis respectivement de deux pièces, 25 et 27, en matière plastique souple, ayant une forme de demi-cylindre, pinçant l'extrémité du circuit 23. La ligne de pincement de cette pince peut s'étendre sur toute la largeur du circuit imprimé 23. Selon une variante de réalistion plusieurs pinces distinctes sont réparties sur la largeur, chacune ne pinçant qu'un segment du bord du circuit imprimé.

Il est prévu un jeu entre l'extrémité du circuit imprimé 23 et le fond de la rainure 24; et les pièces 25 et 27 ont une forme de demi-cylindre, de telle sorte que le circuit imprimé 23 peut pivoter autour de la ligne de pincement, pour permettre la mise en place du circuit imprimé 23, muni du cadre 7', et pour le laisser libre de prendre la position que lui impose sa fixation au cadre 7'. Par contre, la pince ainsi constituée s'oppose à un déplacement du circuit imprimé dans une direction perpendiculaire au plan de celui-ci, en cas de choc par exemple.

Selon une variante de réalisation, la rainure ne comporte pas de pièces 25, 27 en matière souple, à condition que le circuit imprimé 23 soit suffisamment souple pour permettre sa mise en place.

Selon une variante de réalisation, les deux demi-coques du boîtier sont réalisées en métal moulé. Dans ce cas, la fixation du cadre 7 est faite de préférence par des vis.

La figure 4 représente une vue en coupe, partielle, d'une variante de ce second exemple de réalisation. Le lecteur comporte un circuit imprimé rigide 33, de dimensions très supérieures à celles du connecteur de carte. Il est fixé à la demi-coque 32 du boîtier par une pince, en plus des soudures 11'. La pince comporte deux lames ressorts, 34 et 35, intégrées à la demi-coque 32, et serrant un segment du bord du circuit imprimé 33. La largeur de cette pince peut être égale à la largeur du circuit 33, ou bien cette pince peut être fractionnée en plusieurs pinces réparties sur cette largeur. Les deux lames ressorts, 34 et 35, sont symétriques par rapport au circuit imprimé 33. Chacune a une extrémité arrondie de façon à permettre un pivotement du circuit imprimé 33 autour de la ligne de pincement, lors de la mise en place le circuit imprimé 33, et aussi pour qu'il soit libre de prendre la position que lui impose sa fixation au cadre 7' du connecteur de carte. Les lames ressort 34 et 35, sont moulées en même temps que l'ensemble de la demi-coque 32, en matière plastique.

## Revendications

1. Dispositif remplissant notamment la fonction de lecteur de carte à micro-circuit, comportant :
   - un boîtier (1, 2) enveloppant l'ensemble du dispositif;
   - un circuit imprimé (3);
   - des moyens pour fixer le circuit imprimé au boîtier;
   - un connecteur de carte à micro-circuit, comportant :
     -- un cadre isolant (7) supportant des contacts élastiques (5, 6);
     -- un couvercle pour exercer une pression sur une carte à micro-circuit;
     -- des moyens (13) pour fixer le cadre au couvercle;
   caractérisé en ce que le couvercle du connecteur est intégré au boîtier (1, 2) du dispositif; et en ce que les moyens (13) pour fixer le cadre au couvercle fixent le cadre directement au boîtier (2).

2. Dispositif selon la revendication 1, caractérisé en ce que les moyens pour fixer le circuit imprimé (3) au boîtier (1, 2) sont constitués seulement par :
   - des soudures (11) fixant le circuit imprimé (3) à des broches (12) prolongeant les contacts (5, 6);
   - et les moyens (13) pour fixer le cadre (7) au boîtier (1, 2).

3. Dispositif selon la revendication 1, comportant un circuit imprimé rigide (23), caractérisé en ce que les moyens pour fixer le circuit imprimé (23) au boîtier (1', 2') comportent en outre au moins une pince constituée d'une rainure (24) intégrée au boîtier, et dont les deux flancs sont garnis respectivement de deux pièces (25, 27) en matière souple ayant une forme permettant un pivotement du circuit imprimé (23) autour de la ligne de pincement de la pince, chaque pince serrant un segment d'un bord du circuit imprimé (23).

4. Dispositif selon la revendication 1, comportant un circuit imprimé rigide (33), caractérisé en ce que les moyens pour fixer le circuit imprimé au boîtier (31, 32) comportent en outre au moins une pince constituée de deux lames ressorts (34, 35) intégrées au boîtier (31, 32) et serrant au moins un segment d'un bord du circuit imprimé (33), tout en permettant un pivotement du circuit imprimé autour de la ligne de pincement de la pince.

5. Dispositif selon la revendication 1, caractérisé en ce que le boîtier (1, 2) est en matière plastique moulée; et en ce que les moyens pour fixer le cadre (7) au couvercle (1, 2) comportent des rivets (13) intégrés au boîtier (1, 2), ces rivets traversant des trous prévus dans le cadre (7), et constituant en même temps des pieds de centrage du cadre par rapport au couvercle intégré.

# FIG.1

# FIG.2

# FIG. 3

# FIG.4

EP 0 480 334 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 366 513 (ITT)<br>* Colonne 5, ligne 35 - colonne 6, ligne 26; colonne 8, lignes 18-37; figures 1,6 *<br>– – – | 1,2 | G 06 K 7/06 |
| D,Y | EP-A-0 274 288 (SCHLUMBERGER)<br>* Page 3, ligne 28 - page 6, ligne 47; figures 2-11 * | 1,2 | |
| A | | 5 | |
| | – – – | | |
| A | EP-A-0 190 527 (ELECTRONIQUE CKD)<br>* Page 8, ligne 1 - page 11, ligne 12; figures 1,2 *<br>– – – | 1-4 | |
| A | EP-A-0 231 409 (GRUNDIG)<br>* Colonne 3, ligne 1 - colonne 4, ligne 58; revendications 5,8; figures 1-13 *<br>– – – – – | 3-5 | |

**DOMAINES TECHNIQUES RECHERCHES (Int. Cl.5)**

G 06 K

**Le présent rapport de recherche a été établi pour toutes les revendications**

| Lieu de la recherche | Date d'achèvement de la recherche | Examinateur |
|---|---|---|
| La Haye | 19 décembre 91 | FORLEN G.A. |